# EUROPEAN PATENT APPLICATION

(11) **EP 2 337 361 A2**
(43) Date of publication of application: **22.06.2011**
(21) Application number: 10015689.2
(22) Date of filing: 15.12.2010
(51) Int. Cl.: H04N 13/00

(54) **Method and system for synchronizing 3D glasses with 3D video displays**

(30) Priority: 17.12.2009 US 287689 P; 02.02.2010 US 698814
(71) Applicant: Broadcom Corporation, Irvine, CA 92617 (US)
(72) Inventor: Klebanov, Ilya, L3T 3C9 Thornhill, ON (CA); Xuemin, Chen, Rancho Santa Fe, CA 92067 (US); Hulyalkar, Samir, Newtown, PA 18940 (US); Kellermann, Marcus, San Diego, CA 92172 (US)
(74) Representative: Jehle, Volker Armin

(57) **Abstract**

3D glasses may communicate with a video device that is used for playback of 3D video content to determine an operating mode used during the 3D video content playback and to synchronize viewing operations via the 3D glasses during the 3D video content playback based on the determined operating mode. Exemplary operating modes include polarization mode or shutter mode. The 3D video content may comprise stereoscopic left and right views. Polarization of the 3D glasses may be synchronized to polarization of the right and left views in polarization mode; whereas shuttering of the 3D glasses may be synchronized to the frequency of alternating rendering of right and left views in shuttering mode. Synchronization of the 3D glasses may be performed prior to start of the 3D video content playback and/or dynamically during the 3D video content playback. The 3D glasses may communicate with the video device via wireless interfaces.

## Description

### CROSS-REFERENCE TO RELATED APPLICATIONS/INCORPORATION BY REFERENCE

This patent application makes reference to, claims priority to and claims benefit from United States Provisional Application Serial No. 61/287,689 (Attorney Docket Number 20697US01) which was filed on December 17, 2009.

This application also makes reference to:
United States Provisional Application Serial No. 61/287,624 (Attorney Docket Number 20677US01) which was filed on December 17, 2009;
United States Provisional Application Serial No. 61/287,634 (Attorney Docket Number 20678US01) which was filed on December 17, 2009;
United States Application Serial No. 12/554,416 (Attorney Docket Number 20679US01) which was filed on September 4, 2009;
United States Application Serial No. 12/546,644 (Attorney Docket Number 20680US01) which was filed on August 24, 2009;
United States Application Serial No. 12/619,461 (Attorney Docket Number 20681US01) which was filed on November 6, 2009;
United States Application Serial No. 12/578,048 (Attorney Docket Number 20682US01) which was filed on October 13, 2009;
United States Provisional Application Serial No. 61/287,653 (Attorney Docket Number 20683US01) which was filed on December 17, 2009;
United States Application Serial No. 12/604,980 (Attorney Docket Number 20684US02) which was filed on October 23, 2009;
United States Application Serial No. 12/545,679 (Attorney Docket Number 20686US01) which was filed on August 21, 2009;
United States Application Serial No. 12/560,554 (Attorney Docket Number 20687US01) which was filed on September 16, 2009;
United States Application Serial No. 12/560,578 (Attorney Docket Number 20688US01) which was filed on September 16, 2009;
United States Application Serial No. 12/560,592 (Attorney Docket Number 20689US01) which was filed on September 16, 2009;
United States Application Serial No. 12/604,936 (Attorney Docket Number 20690US01) which was filed on October 23, 2009;
United States Provisional Application Serial No. 61/287,668 (Attorney Docket Number 20691US01) which was filed on December 17, 2009;
United States Application Serial No. 12/573,746 (Attorney Docket Number 20692US01) which was filed on October 5, 2009;
United States Application Serial No. 12/573,771 (Attorney Docket Number 20693US01) which was filed on October 5, 2009;
United States Provisional Application Serial No. 61/287,673 (Attorney Docket Number 20694US01) which was filed on December 17, 2009;
United States Provisional Application Serial No. 61/287,682 (Attorney Docket Number 20695US01) which was filed on December 17, 2009;
United States Application Serial No. 12/605,039 (Attorney Docket Number 20696US01) which was filed on October 23, 2009; and
United States Provisional Application Serial No. 61/287,692 (Attorney Docket Number 20698US01) which was filed on December 17, 2009.

Each of the above stated applications is hereby incorporated herein by reference in its entirety

### FEDERALLY SPONSORED RESEARCH OR DEVELOPMENT

[Not Applicable].

### [MICROFICHE/COPYRIGHT REFERENCE]

[Not Applicable].

### FIELD OF THE INVENTION

Certain embodiments of the invention relate to video processing. More specifically, certain embodiments of the invention relate to a method and system for synchronizing 3D glasses with 3D video displays.

### BACKGROUND OF THE INVENTION

Display devices, such as television sets (TVs), may be utilized to output or playback audiovisual or multimedia streams, which may comprise TV broadcasts, telecasts and/or localized Audio/Video (A/V) feeds from one or more available consumer devices, such as videocassette recorders (VCRs) and/or Digital Video Disc (DVD) players. TV broadcasts and/or audiovisual or multimedia feeds may be inputted directly into the TVs, or it may be passed intermediately via one or more specialized set-top boxes that may enable providing any necessary processing operations. Exemplary types of connectors that may be used to input data into TVs include, but not limited to, F-connectors, S-video, composite and/or video component connectors, and/or, more recently, High-Definition Multimedia Interface (HDMI) connectors.

Television broadcasts are generally transmitted by television head-ends over broadcast channels, via RF carriers or wired connections. TV head-ends may comprise terrestrial TV head-ends, Cable-Television (CATV), satellite TV head-ends and/or broadband television head-ends. Terrestrial TV head-ends may utilize, for example, a set of terrestrial broadcast channels, which in the U.S. may comprise, for example, channels 2 through 69. Cable-Television (CATV) broadcasts may utilize even greater number of broadcast channels. TV broadcasts comprise transmission of video and/or audio information, wherein the video and/or audio information may be encoded into the broadcast channels via one of plurality of available modulation schemes. TV Broadcasts may utilize analog and/or digital modulation format. In analog television systems, picture and sound information are encoded into, and transmitted via analog signals, wherein the video/audio information may be conveyed via broadcast signals, via amplitude and/or frequency modulation on the television signal, based on analog television encoding standard. Analog television broadcasters may, for example, encode their signals using NTSC, PAL and/or SECAM analog encoding and then modulate these signals onto a VHF or UHF RF carriers, for example.

In digital television (DTV) systems, television broadcasts may be communicated by terrestrial, cable and/or satellite head-ends via discrete (digital) signals, utilizing one of available digital modulation schemes, which may comprise, for example, QAM, VSB, QPSK and/or OFDM. Because the use of digital signals generally requires less bandwidth than analog signals to convey the same information, DTV systems may enable broadcasters to provide more digital channels within the same space otherwise available to analog television systems. In addition, use of digital television signals may enable broadcasters to provide high-definition television (HDTV) broadcasting and/or to provide other non-television related service via the digital system. Available digital television systems comprise, for example, ATSC, DVB, DMB-T/H and/or ISDN based systems. Video and/or audio information may be encoded into digital television signals utilizing various video and/or audio encoding and/or compression algorithms, which may comprise, for example, MPEG-1/2, MPEG-4 AVC, MP3, AC-3, AAC and/or HE-AAC.

Nowadays most TV broadcasts (and similar multimedia feeds), utilize video formatting standard that enable communication of video images in the form of bit streams. These video standards may utilize various interpolation and/or rate conversion functions to present content comprising still and/or moving images on display devices. For example, de-interlacing functions may be utilized to convert moving and/or still images to a format that is suitable for certain types of display devices that are unable to handle interlaced content. TV broadcasts, and similar video feeds, may be interlaced or progressive. Interlaced video comprises fields, each of which may be captured at a distinct time interval. A frame may comprise a pair of fields, for example, a top field and a bottom field. The pictures forming the video may comprise a plurality of ordered lines. During one of the time intervals, video content for the even-numbered lines may be captured. During a subsequent time interval, video content for the odd-numbered lines may be captured. The even-numbered lines may be collectively referred to as the top field, while the odd-numbered lines may be collectively referred to as the bottom field. Alternatively, the odd-numbered lines may be collectively referred to as the top field, while the even-numbered lines may be collectively referred to as the bottom field. In the case of progressive video frames, all the lines of the frame may be captured or played in sequence during one time interval. Interlaced video may comprise fields that were converted from progressive frames. For example, a progressive frame may be converted into two interlaced fields by organizing the even numbered lines into one field and the odd numbered lines into another field.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for synchronizing 3D glasses with 3D video displays, substantially as shown in and/or described in connection with at least one of the figures, as set forth more completely in the claims.
According to an aspect, a method for video processing comprises:
performing by one or more processors and/or circuits in an optical viewing device:
   determining an operating mode that is utilized for playback of 3D video content; and
   configuring said optical viewing device to synchronize with said playback of said 3D video content based on said determined operating mode.
Advantageously, the method further comprises synchronizing said optical viewing device prior to start of said playback of said 3D video content and/or dynamically during said playback of said 3D video content.
Advantageously, the method further comprises communicating with a video processing device that is utilized for processing and/or displaying of said 3D video content to facilitate said configuration of said optical viewing device.
Advantageously, the method further comprises communicating with said video processing device via one or more wireless interfaces.
Advantageously, said one or more wireless interfaces comprise wireless personal area network (WPAN) interfaces and/or wireless local area network (WLAN) interfaces. Advantageously, said operating mode comprises polarization mode and/or shutter mode.
Advantageously, said 3D video content comprises stereoscopic left and right view video sequences of frames or fields.
Advantageously, the method further comprises, when said optical viewing device is operating in a polarization mode, synchronizing polarization of left eye viewing via said optical viewing device with polarization of said stereoscopic left view video sequence and/or polarization of right eye viewing via said optical viewing device with polarization of said stereoscopic right view video sequence.
Advantageously, the method further comprises, when said optical viewing device is operating in a shutter mode, synchronizing shuttering of left eye viewing via said optical viewing device with displaying of frames and/or fields of said stereoscopic left view video sequence and/or shuttering of right eye viewing via said optical viewing device with displaying of frames and/or fields of said stereoscopic right view video sequence.
According to an aspect, a method for video processing comprises:
performing by one or more processors and/or circuits in a video processing system:
   generating a three dimensional (3D) output video stream for display based on a plurality of view sequences extracted from an 3D input video stream; and
   communicating with an optical viewing device that is utilized for viewing of said 3D output video stream, prior to and/or during playback of said 3D output video stream, to enable configuring said optical viewing device for said viewing and/or to enable synchronizing said viewing via said optical viewing device.
According to a further aspect, a system for video processing comprises:
one or more circuits and/or processors in an optical viewing device that are operable to determine an operating mode that is utilized for playback of 3D video content; and
said one or more circuits and/or processors are operable to configure said optical viewing device to synchronize with said playback of said 3D video content based on said determined operating mode.
Advantageously, said one or more circuits and/or processors are operable to synchronize said optical viewing device prior to start of said playback of said 3D video content and/or dynamically during said playback of said 3D video content.
Advantageously, said one or more circuits and/or processors are operable to communicate with a video processing device that is utilized for processing and/or displaying of said 3D video content to facilitate said configuration of said optical viewing device.
Advantageously, said one or more circuits and/or processors are operable to communicate with said video processing device via one or more wireless interfaces.
Advantageously, said one or more wireless interfaces comprise wireless personal area network (WPAN) interfaces and/or wireless local area network (WLAN) interfaces.
Advantageously, said operating mode comprises polarization mode and/or shutter mode.
Advantageously, said 3D video content comprises stereoscopic left and right view video sequences of frames or fields.
Advantageously, said one or more circuits and/or processors are operable to, when said optical viewing device is operating in a polarization mode, synchronize polarization of left eye viewing via said optical viewing device with polarization of said stereoscopic left view video sequence and/or polarization of right eye viewing via said optical viewing device with polarization of said stereoscopic right view video sequence.
Advantageously, said one or more circuits and/or processors are operable to, when said optical viewing device is operating in a shutter mode, synchronize shuttering of left eye viewing via said optical viewing device with displaying of frames and/or fields of said stereoscopic left view video sequence and/or shuttering of right eye viewing via said optical viewing device with displaying of frames and/or fields of said stereoscopic right view video sequence.
According to an aspect, a system for video processing comprises:
one or more circuits and/or processors that are operable to generate a three dimensional (3D) output video stream for display based on a plurality of view sequences extracted from an 3D input video stream; and
said one or more circuits and/or processors are operable to communicate with an optical viewing device that is utilized for viewing of said 3D output video stream, prior to and/or during playback of said 3D output video stream, to enable configuring said optical viewing device for said viewing and/or to enable synchronizing said viewing via said optical viewing device.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary video system that supports TV broadcasts and/or local multimedia feeds, in accordance with an embodiment of the invention.

FIG. 2A is a block diagram illustrating an exemplary video system that may be operable to provide communication of 3D video, in accordance with an embodiment of the invention.

FIG. 2B is a block diagram illustrating an exemplary video processing system that may be operable to generate video streams comprising 3D video, in accordance with an embodiment of the invention.

FIG. 2C is a block diagram illustrating an exemplary video processing system that may be operable to process and display video input comprising 3D video, and to enable synchronizing 3D video playback operations with 3D glasses, in accordance with an embodiment of the invention.

FIG. 3 is a flow chart that illustrates exemplary steps for synchronizing 3D glasses with 3D video displays, in accordance with an embodiment of the invention.

### DETAILED DESCRIPTION OF THE INVENTION

Certain embodiments of the invention may be found in a method and system for synchronizing 3D glasses with 3D video displays. In various embodiments of the invention, an optical viewing device may be operable to determine an operating mode that is used during viewing of playback of 3D video content, and to configure and/or synchronize its operations with playback of the 3D video content based on the determined operating mode. Exemplary operating modes may comprise polarization mode and/or shutter mode. Synchronizing the optical viewing device may be performed during initialization of the optical viewing device, prior to start of the playback of the 3D video content, and/or dynamically during the playback of the 3D video content. The optical viewing device may communicate with a video processing device that is utilized for processing and/or displaying the 3D video content, to facilitate configuration and/or synchronization of the optical viewing device. The optical viewing device may communicate with the video processing device via one or more wireless interfaces. Exemplary wireless interfaces may comprise wireless personal area network (WPAN) interfaces and/or wireless local area network (WLAN) interfaces.

The 3D video content may comprise, for example, stereoscopic left and right view video sequences of frames or fields. Accordingly, when the optical viewing device is operating in polarization mode, polarization of left eye viewing via the optical viewing device may be synchronized with polarization of the stereoscopic left view video sequence and/or polarization of right eye viewing via the optical viewing device may be synchronized with polarization of the stereoscopic right view video sequence. In instances where the optical viewing device is operating in shuttering mode, shuttering of left eye viewing via the optical viewing device may be synchronized with rendering of frames and/or fields of the stereoscopic left view video sequence and/or shuttering of right eye viewing via the optical viewing device may be synchronized with displaying of frames and/or fields of the stereoscopic right view video sequence.

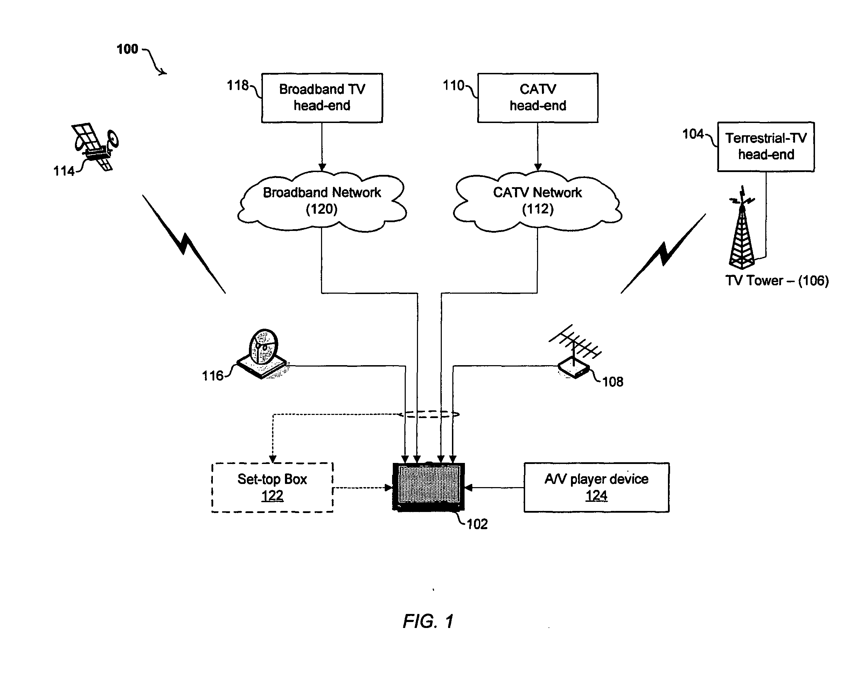

FIG. 1 is a block diagram illustrating an exemplary video system that supports TV broadcasts and/or local multimedia feeds, in accordance with an embodiment of the invention. Referring to FIG. 1, there is shown a media system 100 which may comprise a display device 102, a terrestrial-TV head-end 104, a TV tower 106, a TV antenna 108, a cable-TV (CATV) head-end 110, a cable-TV (CATV) distribution network 112, a satellite-TV head-end 114, a satellite-TV receiver 116, a broadband-TV head-end 118, a broadband network 120, a set-top box 122, and an audio-visual (AV) player device 124.

The display device 102 may comprise suitable logic, circuitry, interfaces and/or code that enable playing of multimedia streams, which may comprise audio-visual (AV) data. The display device 102 may comprise, for example, a television, a monitor, and/or other display and/or audio playback devices, and/or components that may be operable to playback video streams and/or corresponding audio data, which may be received, directly by the display device 102 and/or indirectly via intermediate devices, such as the set-top box 122, and/or from local media recording/playing devices and/or storage resources, such as the AV player device 124.

The terrestrial-TV head-end 104 may comprise suitable logic, circuitry, interfaces and/or code that may enable over-the-air broadcast of TV signals, via one or more of the TV tower 106. The terrestrial-TV head-end 104 may be enabled to broadcast analog and/or digital encoded terrestrial TV signals. The TV antenna 108 may comprise suitable logic, circuitry, interfaces and/or code that may enable reception of TV signals transmitted by the terrestrial-TV head-end 104, via the TV tower 106. The CATV head-end 110 may comprise suitable logic, circuitry, interfaces and/or code that may enable communication of cable-TV signals. The CATV head-end 110 may be enabled to broadcast analog and/or digital formatted cable-TV signals. The CATV distribution network 112 may comprise suitable distribution systems that may enable forwarding of communication from the CATV head-end 110 to a plurality of cable-TV recipients, comprising, for example, the display device 102. For example, the CATV distribution network 112 may comprise a network of fiber optics and/or coaxial cables that enable connectivity between one or more instances of the CATV head-end 110 and the display device 102.

The satellite-TV head-end 114 may comprise suitable logic, circuitry, interfaces and/or code that may enable down link communication of satellite-TV signals to terrestrial recipients, such as the display device 102. The satellite-TV head-end 114 may comprise, for example, one of a plurality of orbiting satellite nodes in a satellite-TV system. The satellite-TV receiver 116 may comprise suitable logic, circuitry, interfaces and/or code that may enable reception of downlink satellite-TV signals transmitted by the satellite-TV head-end 114. For example, the satellite receiver 116 may comprise a dedicated parabolic antenna operable to receive satellite television signals communicated from satellite television head-ends, and to reflect and/or concentrate the received satellite signal into focal point wherein one or more low-noise-amplifiers (LNAs) may be utilized to down-convert the received signals to corresponding intermediate frequencies that may be further processed to enable extraction of audio/video data, via the set-top box 122 for example. Additionally, because most satellite-TV downlink feeds may be securely encoded and/or scrambled, the satellite-TV receiver 116 may also comprise suitable logic, circuitry, interfaces and/or code that may enable decoding, descrambling, and/or deciphering of received satellite-TV feeds.

The broadband-TV head-end 118 may comprise suitable logic, circuitry, interfaces and/or code that may enable multimedia/TV broadcasts via the broadband network 120. The broadband network 120 may comprise a system of interconnected networks, which enables exchange of information and/or data among a plurality of nodes, based on one or more networking standards, including, for example, TCP/IP. The broadband network 120 may comprise a plurality of broadband capable sub-networks, which may include, for example, satellite networks, cable networks, DVB networks, the Internet, and/or similar local or wide area networks, that collectively enable conveying data that may comprise multimedia content to plurality of end users. Connectivity may be provide via the broadband network 120 based on copper-based and/or fiber-optic wired connection, wireless interfaces, and/or other standards-based interfaces. The broadband-TV head-end 118 and the broadband network 120 may correspond to, for example, an Internet Protocol Television (IPTV) system.

The set-top box 122 may comprise suitable logic, circuitry, interfaces and/or code that may enable processing of TV and/or multimedia streams/signals transmitted by one or more TV head-ends external to the display device 102. The AV player device 124 may comprise suitable logic, circuitry, interfaces and/or code that enable providing video/audio feeds to the display device 102. For example, the AV player device 124 may comprise a digital video disc (DVD) player, a Blu-ray player, a digital video recorder (DVR), a video game console, a surveillance system, and/or a personal computer (PC) capture/playback card. While the set-top box 122 and the AV player device 124 are shown are separate entities, at least some of the functions performed via the top box 122 and/or the AV player device 124 may be integrated directly into the display device 102.

In operation, the display device 102 may be utilized to playback media streams received from one of available broadcast head-ends, and/or from one or more local sources. The display device 102 may receive, for example, via the TV antenna 108, over-the-air TV broadcasts from the terrestrial-TV head end 104 transmitted via the TV tower 106. The display device 102 may also receive cable-TV broadcasts, which may be communicated by the CATV head-end 110 via the CATV distribution network 112; satellite TV broadcasts, which may be communicated by the satellite head-end 114 and received via the satellite receiver 116; and/or Internet media broadcasts, which may be communicated by the broadband-TV head-end 118 via the broadband network 120.

TV head-ends may utilize various formatting schemes in TV broadcasts. Historically, TV broadcasts have utilized analog modulation format schemes, comprising, for example, NTSC, PAL, and/or SECAM. Audio encoding may comprise utilization of separate modulation scheme, comprising, for example, BTSC, NICAM, mono FM, and/or AM. More recently, however, there has been a steady move towards Digital TV (DTV) based broadcasting. For example, the terrestrial-TV head-end 104 may be enabled to utilize ATSC and/or DVB based standards to facilitate DTV terrestrial broadcasts. Similarly, the CATV head-end 110 and/or the satellite head-end 114 may also be enabled to utilize appropriate encoding standards to facilitate cable and/or satellite based broadcasts.

The display device 102 may be operable to directly process multimedia/TV broadcasts to enable playing of corresponding video and/or audio data. Alternatively, an external device, for example the set-top box 122, may be utilized to perform processing operations and/or functions, which may be operable to extract video and/or audio data from received media streams, and the extracted audio/video data may then be played back via the display device 102.

In exemplary aspect of the invention, the media system 100 may be operable to support three-dimension (3D) video. There has been a recent push towards the development and/or use of three-dimensional (3D) video instead of 2D video. Various methods may be utilized to capture, generate (at capture or playtime), and/or render 3D video images. One of the more common methods for implementing 3D video is stereoscopic 3D video. In stereoscopic 3D video based applications, the 3D video impression is generated by rendering multiple views, most commonly two views: a left view and a right view, corresponding to the viewer's left eye and right eye to give depth to displayed images. In this regard, left view and right view video sequences may be captured and/or processed to enable creating 3D images. The left view and right view data may then be communicated either as separate streams, or may be combined into a single transport stream and only separated into different view sequences by the end-user receiving/displaying device. The communication of stereoscopic 3D video may be by means of TV broadcasts. In this regard, one or more of the TV head-ends may be operable to communicate 3D video content to the display device 102, directly and/or via the set-top box 122. The communication of stereoscopic 3D video may also be performed by use of multimedia storage devices, such as DVD or Blu-ray discs, which may be used to store 3D video data that subsequently may be played back via an appropriate player, such as the AV player device 124. Various compression/encoding standards may be utilized to enable compressing and/or encoding of the view sequences into transport streams during communication of stereoscopic 3D video. For example, the separate left and right view video sequences may be compressed based on MPEG-2 MVP, H.264 and/or MPEG-4 advanced video coding (AVC) or MPEG-4 multi-view video coding (MVC).

In various embodiments of the invention, 3D glasses may be utilized to enable 3D viewing during playback of 3D video via the display device 102, and the operations of the 3D glasses may be synchronized to the operations of the display device 102 to facilitate 3D video viewing. The display device 102 may, in some instances, enable playback of 3D video without the need for use of any additional devices. For example, the display device 102 may incorporate one or more techniques that may enable auto-stereoscopic 3D display, such as, for example, lenticular screens and/or parallax barriers. In some instances, however, the display device 102 may not be capable of rendering video images which may independently generate 3D viewing perception. Accordingly, specialized optical devices such as 3D capable glasses may be utilized in conjunction with the display device 102 to provide desirable 3D viewing experience. Such 3D capable glasses may incorporate various 3D viewing methods. Exemplary techniques that may be utilized in 3D glasses may comprise polarization and/or shutter based operations.

In polarization based operations, each side's glass or lens may have a different polarization such that the eyes may simultaneously receive differently polarized images, which when combined in the brain, may render 3D impression. For example, during stereoscopic 3D video playback, the right and left view images may be rendered, on the display device 102, with different polarization. To facilitate 3D viewing, polarized 3D glasses for which the right and left eye glass polarization identical to the polarization of the right and left view images polarization may be utilized. Accordingly, the right eye would only perceive the right view images and the left eye would only perceive the left view images, and the 3D perception is generated when the right and left eye images are combined in the brain.

In shutter mode operations, each side's glass or lens may be closed and/or open such that image perception via, each eye, would alternate to enable receiving different images which when combined in the brain may render 3D impression. For example, during stereoscopic 3D video playback, rendering of the right and left view images, via the display device 102, may be alternated. To facilitate 3D viewing, shuttered 3D glasses for which the right and left eye glass shutter at the same rate as the frequency of rendering of right and left view images may be utilized. Accordingly, the right eye would only perceive the right view images and the left eye would only perceive the left view images, and the 3D perception is generated when the right and left image perceptions are combined in the brain.

In an exemplary aspect of the invention, operations of the 3D glasses may be actively synchronized to enable providing 3D viewing. Current 3D glasses may incorporate passive polarization and/or shuttering-i.e., the glasses may come with a pre-configured and/or non-adjustable polarization. To enhance usability of 3D glasses, however, the configuration and/or operations of the 3D glasses may be changed and/or adjusted prior to and/or during video playback. For example, in instances where the 3D glasses are operated in polarization mode, the polarization parameters and/or operations of 3D glasses may be configured such that the polarization of the 3D glasses may be the same as polarization of the right and left view sequences displayed via the display device 102. Similarly, in instances where the 3D glasses are operated in shuttering mode, the shuttering operations of the 3D glasses may be synchronized to the frequency of rendering for each of the views (e.g. right and left view rendering) displayed via the display device 102. The 3D glasses synchronization may be performed based on information communicated by the display device 102. The synchronization may be preformed prior to the start of 3D video playback operations, and/or may be performed dynamically during 3D video playback operations.

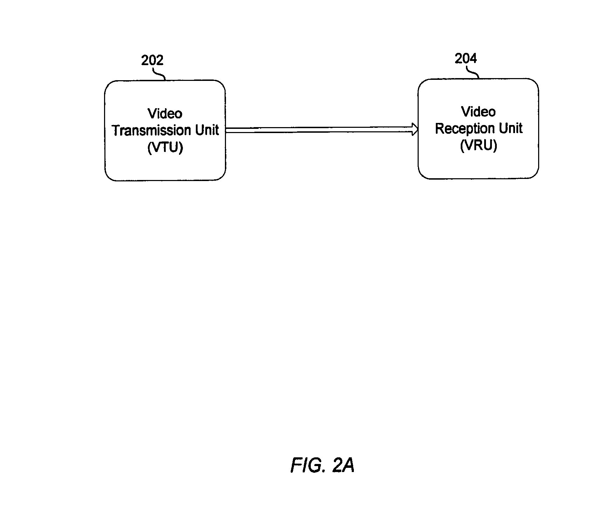

FIG. 2A is a block diagram illustrating an exemplary video system that may be operable to provide communication of 3D video, in accordance with an embodiment of the invention. Referring to FIG. 2A, there is shown a 3D video transmission unit (3D-VTU) 202 and a 3D video reception unit (3D-VRU) 204.

The 3D-VTU 202 may comprise suitable logic, circuitry, interfaces and/or code that may be operable to generate video streams that may comprise encoded/compressed 3D video data, which may be communicated, for example, to the 3D-VRU 204 for display and/or playback. The 3D video generated via the 3D-VTU 202 may be communicated via TV broadcasts, by one or more TV head-ends. The 3D video generated via the 3D-VTU 202 may be also stored into multimedia storage devices, such as DVD or Blu-ray discs.

The 3D-VRU 204 may comprise suitable logic, circuitry, interfaces and/or code that may be operable to receive and/or process video streams comprising 3D video data for playback. The 3D-VRU 204 may be operable to, for example, receive and/or process transport streams comprising 3D video data, which may be communicated directly by, the 3D-VTU 202 for example, via TV broadcasts. The 3D-VRU 204 may also be operable to receive and/or process video streams read from multimedia storage devices which may be played directly via the 3D-VRU 204 and/or via local suitable player devices. In this regard, the operations of the 3D-VRU 204 may be performed, for example, via the display device 102, the set-top box 122, and/or the AV player device 124 of FIG. 1. The received video streams may comprise encoded/compressed 3D video data. Accordingly, the 3D-VRU 204 may be operable to process the received video stream to extract various video contents in the transport stream, and may be operable to decode and/or process the extracted video streams and/or contents to facilitate display operations.

In operation, the 3D-VTU 202 may be operable to generate video streams comprising 3D video data. The 3D-VTU 202 may compress and/or encode, for example, the 3D video data as stereoscopic 3D video comprising left view and right view sequences. The 3D-VRU 204 may be operable to receive and process the video streams to facilitate playback of video content included in the video stream via appropriate display devices. In this regard, the 3D-VRU 204 may be operable to, for example, demultiplex received transport stream into encoded 3D video streams and/or additional video streams. The 3D-VRU 204 may decode and/or uncompress the 3D video data in the received video stream for display.

In various embodiments of the invention, 3D glasses may be utilized to enable 3D viewing during playback of 3D video received via the 3D-VRU 204. Furthermore, the operations of the 3D glasses may be synchronized to the video playback operations of the 3D-VRU 204, to facilitate the desired 3D video viewing, substantially as described with regard to, for example, FIG. 1. In this regard, the 3D glasses may be synchronized, for example, to the polarization of the right and left view sequences of stereoscopic 3D video content in polarization mode and/or to the rendering frequency when displaying the right and left view in shuttering mode.

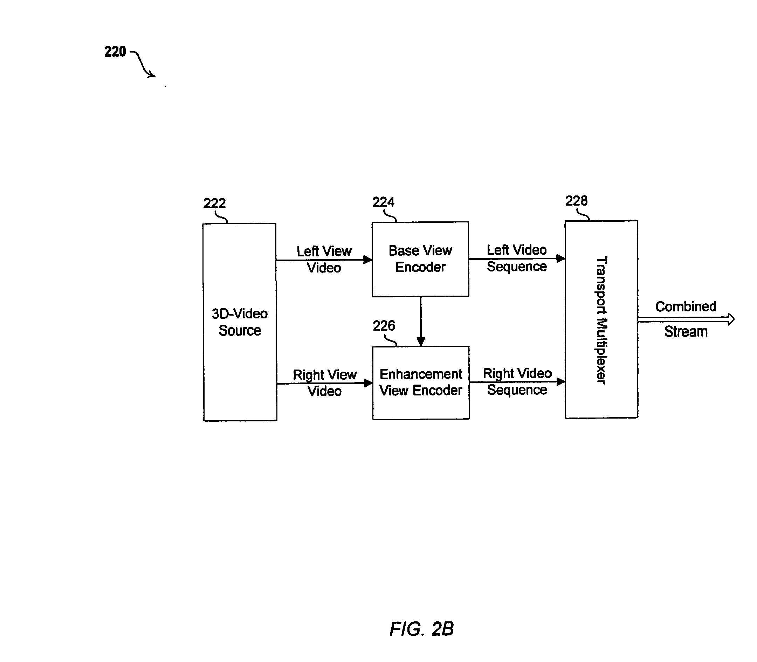

FIG. 2B is a block diagram illustrating an exemplary video processing system that may be operable to generate video streams comprising 3D video, in accordance with an embodiment of the invention. Referring to FIG. 2B, there is shown there is shown a video processing system 220, a 3D-video source 222, a base view encoder 224, an enhancement view encoder 226, and a transport multiplexer 228.

The video processing system 220 may comprise suitable logic, circuitry, interfaces and/or code that may be operable to capture, generate, and/or process 3D video data, and to generate transport streams comprising the 3D video. The video processing system 220 may comprise, for example, the 3D-video source 222, the base view encoder 224, the enhancement view encoder 226, and/or the transport multiplexer 228. The video processing system 220 may be integrated into the 3D-VTU 202 to facilitate generation of video and/or transport streams comprising 3D video data.

The 3D-video source 222 may comprise suitable logic, circuitry, interfaces and/or code that may be operable to capture and/or generate source 3D video contents. The 3D-video source 222 may be operable to generate stereoscopic 3D video comprising left view and right view video data from the captured source 3D video contents, to facilitate 3D video display/playback. The left view video and the right view video may be communicated to the base view encoder 224 and the enhancement view encoder 226, respectively, for video compressing.

The base view encoder 224 may comprise suitable logic, circuitry, interfaces and/or code that may be operable to encode the left view video from the 3D-video source 222, for example on frame by frame basis. The base view encoder 224 may be operable to utilize various video encoding and/or compression algorithms such as those specified in MPEG-2, MPEG-4, AVC, VC1, VP6, and/or other video formats to form compressed and/or encoded video contents for the left view video from the 3D-video source 222. In addition, the base view encoder 224 may be operable to communication information, such as the scene information from base view coding, to the enhancement view encoder 226 to be used for enhancement view coding.

The enhancement view encoder 226 may comprise suitable logic, circuitry, interfaces and/or code that may be operable to encode the right view video from the 3D-video source 222, for example on frame by frame basis. The enhancement view encoder 226 may be operable to utilize various video encoding and/or compression algorithms such as those specified in MPEG-2, MPEG-4, AVC, VC1, VP6, and/or other video formats to form compressed or encoded video content for the right view video from the 3D-video source 222. Although a single enhancement view encoder 226 is illustrated in FIG. 2B, the invention may not be so limited. Accordingly, any number of enhancement view video encoders may be used for processing the left view video and the right view video generated by the 3D-video source 222 without departing from the spirit and scope of various embodiments of the invention.

The transport multiplexer 228 may comprise suitable logic, circuitry, interfaces and/or code that may be operable to merge a plurality of video sequences into a single compound video stream. The combined video stream may comprise the left (base) view video sequence, the right (enhancement) view video sequence, and a plurality of addition video streams, which may comprise, for example, advertisement streams.

In operation, the 3D-video source 222 may be operable to capture and/or generate source 3D video contents to produce, for example, stereoscopic 3D video data that may comprise a left view video and a right view video for video compression. The left view video may be encoded via the base view encoder 224 producing the left (base) view video sequence. The right view video may be encoded via the enhancement view encoder 226 to produce the right (enhancement) view video sequence. The base view encoder 224 may be operable to provide information such as the scene information to the enhancement view encoder 226 for enhancement view coding, to enable generating depth data, for example. Transport multiplexer 228 may be operable to combine the left (base) view video sequence and the right (enhancement) view video sequence to generate a combined video stream. Additionally, one or more additional video streams may be multiplexed into the combined video stream via the transport multiplexer 228. The resulting video stream may then be communicated, for example, to the 3D-VRU 204, substantially as described with regard to FIG. 2A.

In various embodiments of the invention, the 3D video content generated, captured, and/or processed via the video processing system 220 may be viewed utilizing 3D capable glasses. In this regard, 3D glasses may be utilized to enable 3D viewing during playback of 3D video received via, for example, the 3D-VRU 204. The 3D glasses may provide 3D viewing by enabling, for example, separate perception of the left view and right view video sequences via the left and right eye, respectively. Accordingly, 3D impressions may be generated by combining the left and right images in the brain. In an exemplary aspect of the invention, the operations of the 3D glasses may be synchronized to the video playback operations of the 3D-VRU 204, based on information communicated via the 3D-VRU 204 for example, to facilitate desired 3D video viewing.

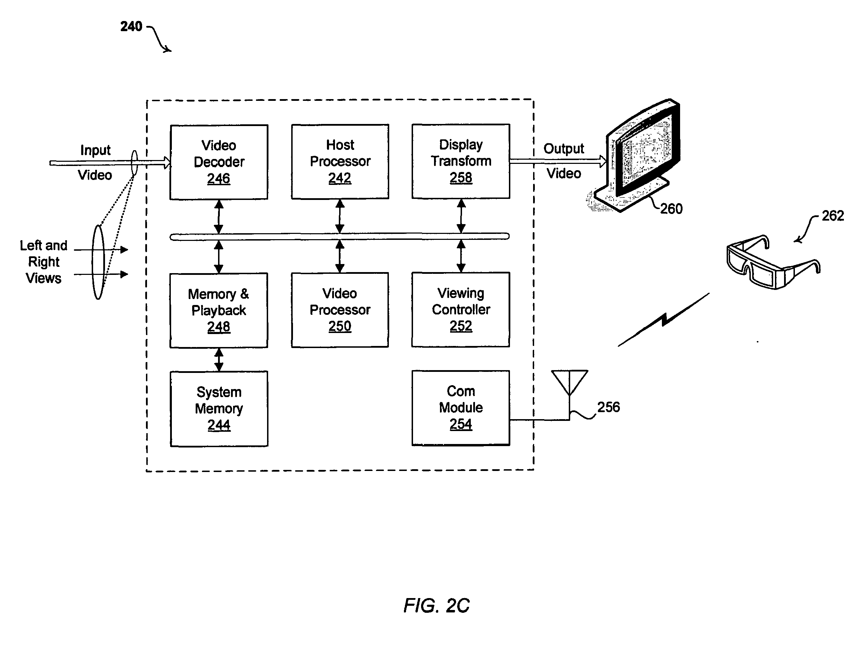

FIG. 2C is a block diagram illustrating an exemplary video processing system that may be operable to process and display video input comprising 3D video, and to enable synchronizing 3D video playback operations with 3D glasses, in accordance with an embodiment of the invention. Referring to FIG. 2C there is shown a video processing system 240, a host processor 242, a system memory 244, an video decoder 246, a memory and playback module 248, a video processor 250, a viewing controller 252, a communication module 254, an antenna subsystem 256, a display transform module 258, a display 260, and 3D glasses 262.

The video processing system 240 may comprise suitable logic, circuitry, interfaces and/or code that may be operable to receive and process 3D video data in a compression format and may render reconstructed output video for display. The video processing system 240 may comprise, for example, the host processor 242, the system memory 244, the video decoder 246, the memory and playback module 248, the video processor 250, the viewing controller 252, the communication module 254, and/or the display transform module 258. For example, the video processing system 240 may be integrated into the 3D-VRU 204 to facilitate reception and/or processing of transport streams comprising 3D video content communicated by the 3D-VTU 202. The video processing system 240 may be operable to handle interlaced video fields and/or progressive video frames. In this regard, the video processing system 240 may be operable to decompress and/or up-convert interlaced video and/or progressive video. The video fields, for example, interlaced fields and/or progressive video frames may be referred to as fields, video fields, frames or video frames. In an exemplary aspect of the invention, the video processing system 240 may be operable to interface with optical viewing devices, such as 3D glasses 262, to enable synchronizing operations of the 3D glasses 262 during 3D video playback operations.

The host processor 242 may comprise suitable logic, circuitry, interfaces and/or code that may be operable to process data and/or control operations of the video processing system 240. In this regard, the host processor 242 may be operable configure and/or controlling operations of various other components and/or subsystems of the video processing system 240, by providing, for example, control signals to various other components and/or subsystems of the video processing system 240. The host processor 242 may also control data transfers within the video processing system 240, during video processing operations for example. The host processor 242 may enable execution of applications, programs and/or code, which may be stored in the system memory 244, to enable, for example, performing various video processing operations such as decompression, motion compensation operations, interpolation or otherwise processing 3D video data. The system memory 244 may comprise suitable logic, circuitry, interfaces and/or code that may operable to store information comprising parameters and/or code that may effectuate the operation of the video processing system 240. The parameters may comprise configuration data and the code may comprise operational code such as software and/or firmware, but the information need not be limited in this regard. Additionally, the system memory 244 may be operable to store 3D video data, for example, data that may comprise left and right views of stereoscopic image data.

The video decoder 246 may comprise suitable logic, circuitry, interfaces and/or code that may be operable to process encoded video data. In this regard, the video decoder 246 may be operable to demultiplex and/or parse received transport streams to extract streams and/or sequences within them, and/or to decompress video data that may be carried via the received transport streams, and/or may perform additional security operations such as digital rights management. The compressed video data in the received transport stream may comprise 3D video data corresponding to a plurality of view stereoscopic video sequences of frames or fields, such as left and review views. The received video data may be compressed and/or encoded via MPEG-2 transport stream (TS) protocol or MPEG-2 program stream (PS) container formats, for example. In various embodiments of the invention, the left view data and the right view data may be received in separate streams or separate files. In this instance, the video decoder 246 may decompress the received separate left and right view video data based on, for example, MPEG-2 MVP, H.264 and/or MPEG-4 advanced video coding (AVC) or MPEG-4 multi-view video coding (MVC). In other embodiments of the invention, the stereoscopic left and right views may be combined into a single sequence of frames. For example, side-by-side, top-bottom and/or checkerboard lattice based 3D encoders may convert frames from a 3D stream comprising left view data and right view data into a single-compressed frame and may use MPEG-2, H.264, AVC and/or other encoding techniques. In this instance, the video data may be decompressed by the video decoder 246 based on MPEG-4 AVC and/or MPEG-2 main profile (MP), for example.

The memory and playback module 248 may comprise suitable logic, circuitry interfaces and/or code that may be operable to buffer 3D video data, for example, left and/or right views, while it is being transferred from one process and/or component to another. In this regard, the memory and playback module 248 may receive data from the video decoder 246 and may transfer data to the display transform module 258, the video processor 250, and/or the viewing controller 252. In addition, the memory and playback module 248 may buffer decompressed reference frames and/or fields, for example, during frame interpolation, by the display transform module 258, and/or contrast enhancement processing operations. The memory and playback module 248 may exchange control signals with the host processor 242 for example and/or may write data to the system memory 244 for longer term storage.

The video processor 250 may comprise suitable logic, circuitry, interfaces and/or code that may be operable to perform video processing operations on received video data to facilitate generating output video streams, which may be played via the display 260. The video processor 250 may be operable, for example, to generate video frames that may provide 3D video playback via the display 260 based on a plurality of view sequences extracted from the received transport streams. In this regard, the video processor 250 may utilize the video data, such as luma and/or chroma data, in the received view sequences of frames and/or fields.

The viewing controller 252 may comprise suitable logic, circuitry, interfaces and/or code that may be operable to manage interactions with optical viewing devices such as the 3D glasses 262. In this regard, the viewing controller 252 may be operable, for example, to determine and/or adjust polarization of each of the left and right view sequences in stereoscopic 3D video and/or to forward polarization information and/or parameters, via the communication module 254, to the 3D glasses 262 to enable performing synchronization operations in the 3D glasses 262. Similarly, in instances where the 3D glasses 262 may be operated in shutter mode, the viewing controller 252 may be operable to determine and/or adjust the frame rate and/or the alternating frequency of the left and right view sequences in stereoscopic 3D video, and/or to forward shuttering related information and/or parameters, via the communication module 254, to the 3D glasses 262 to enable performing synchronization operations in the 3D glasses 262.

The communication module 254 may comprise suitable logic, circuitry, interfaces and/or code that may be operable to provide communicating links between the video processing system 240 and one or more devices, such as the 3D glasses 262, which are communicatively coupled to the video processing system 240. In this regard, the communication module processing of signals transmitted and/or received via, for example, the antenna subsystem 256. The communication module 254 may be operable, for example, to amplify, filter, modulate/demodulate, and/or up-convert/down-convert baseband signals to and/or from RF signals to enable transmitting and/or receiving RF signals corresponding to one or more wireless standards. Exemplary wireless standards may comprise wireless personal area network (WPAN), wireless local area network (WLAN), and/or proprietary based wireless standards. In this regard, the communication module 254 may be utilized to enable communication via Bluetooth, ZigBee, 60 GHz, Ultra-Wideband (UWB), and/or IEEE 802.11 (e.g. WiFi) interfaces.

The communication module 254 may perform necessary conversions between received RF signals and baseband frequency signals that may be processed via digital baseband processors (not shown), for example. During uplink communications (i.e., reception), for example, the communication module 254 may generate necessary signals, such as local oscillator signals, to facilitate reception and processing of RF signals at specific frequencies. The communication module may then perform direct or intermediate down-conversion of the received RF signals to a baseband frequency signals, for example. In some instances, the communication module 254 may enable analog-to-digital conversion of baseband signal components before transferring the components to digital baseband processors. During downlink communications (i.e., transmission), the communication module 254 may generate necessary signals, such as local oscillator signals, for the transmission and/or processing of RF signals at specific frequencies. The communication module 254 may then perform necessary conversions between baseband frequency signals, generated via digital baseband processors for example, and transmitted RF signals. In some instances, the communication module 254 may enable digital-to-analog conversion of baseband signals components.

The antenna subsystem 256 comprises suitable logic, circuitry and/or code that may enable transmission and/or reception RF via one or more antennas that are configurable for RF communication within certain bandwidths that correspond to one or more supported wireless interfaces. For example, the antenna subsystem 256 may enable RF transmission and/or reception via the 2.4 GHz bandwidth which is suitable for Bluetooth and/or WLAN RF transmissions and/or receptions.

The display transform module 258 may comprise suitable logic, circuitry, interfaces and/or code that may be operable to process video data generated and/or processed via the video processing system 240 to generate an output video stream that is suitable for playback via the display 260. In this regard, the display transform module 258 may perform, for example, frame upconversion based on motion estimation and/or motion compensation to increase the number of frames where the display 260 has higher frame rate than the input video streams. In instances where the display 260 may not be 3D capable, to convert 3D video data generated and/or processed via the video processing system 240 to 2D output video. In this regard, the 3D video converted to 2D output stream may comprise blended 3D input video and 3D graphics. In an exemplary aspect of the invention, the display transform module 258 may be operable to adjust and/or modify certain aspect of the 3D video output stream to ensure synchronized viewing via the 3D glasses 262. For example, the display transform module 258 may adjust, based on feedback from the viewing controller 252 for example, polarization of the left and/or right view sequences in the output stream to ensure that the polarization of the right and/or left eye in the 3D glasses 262 is synchronized with the polarization of the right and/or left view sequences.

The display 260 may comprise suitable logic, circuitry, interfaces and/or code that may be operable to receive reconstructed fields and/or frames of video data after processing in the display transform module 258 and may display corresponding images. The display 260 may be a separate device, or the display 260 and the video processing system 240 may implemented as single unitary device. The display 260 may be operable to perform 2D and/or 3D video display. In this regard, a 2D display may be operable to display video that was generated and/or processed utilizing 3D techniques.

The 3D glasses 262 may comprise suitable logic, circuitry, interfaces and/or code that may be operable to provide 3D viewing in conjunction with display devices that may not be able to provide 3D display independently. For example, in instances where the video processing system 240 may receive stereoscopic 3D video content, the display 260 may lack auto-stereoscopic 3D playback capabilities, and accordingly may not be capable of rendering 3D video images and/or provide for 3D viewing perception. Accordingly, the 3D glasses 262 may be utilized to enable independent image perception for user's left and right eyes such that the combined effects may correspond to 3D perception. In this regard, the viewing settings and/or operations via the 3D glasses 262 may be configured and/or synchronized with the display and/or playback operations via the display 260 to ensure that desired 3D results may be produced.

In operation, the video processing system 240 may be utilized to facilitate reception and processing of transport stream comprising video data, and to generate and process output video streams that are playable via a local display device, such as the display 260. Processing the received transport stream may comprise demultiplexing the transport stream to extract plurality of compressed video, which may correspond to, for example, view sequences and/or additional information. Demultiplexing the transport stream may be performed within the video decoder 246, or via a separate component (not shown). The video decoder 246 may be operable to receive the transport streams comprising compressed stereoscopic video data, in multi-view compression format for example, and to decode and/or decompress that video data. For example, the received transport streams may comprise left and right stereoscopic views. The video decoder 246 may be operable to decompress the received stereoscopic video data and may buffer the decompressed data via the memory and playback module 248. The decompressed video data may then be processed to enable playback via the display 260. The video processor 250 may be operable to generate output video streams, which 3D and/or 2D, based on decompressed video data. In this regard, where stereoscopic 3D video is utilized, the video processor 250 may process decompressed reference frames and/or fields, corresponding to plurality of view sequences, which may be retrieved via the memory and playback module 248, to enable generation of corresponding 3D video steam that may be further processed via the display transform module 258 and/or the viewing controller 252 prior to playback via the display 260. For example, where necessary the display transform module 258 may perform motion compensation and/or may interpolate pixel data in one or more frames between the received frames in order to enable the frame rate up-conversion. The viewing controller 252 may be utilized to provide local graphics processing, to enable splicing, for example, graphics into the generated and enhanced video output stream, and the final video output stream may then be played via the display 260.

In various embodiments of the invention, the 3D glasses 262 may be utilized to facilitate 3D viewing of 3D video streams received and/or processed via video processing system 240. In this regard, the 3D glasses 262 may be utilized to enable 3D viewing during playback of 3D video content corresponding to output video generated via the video processing system 240 and displayed via the display 260. In an exemplary aspect of the invention, the operations of the 3D glasses 262 may be synchronized with the operations of the video processing system 240 and/or the display 260 during 3D video viewing via the 3D glasses 262. For example, in instances where the input video stream comprises stereoscopic 3D video content, the display 260 may enable independent 3D video playback by incorporating one or more techniques, such as lenticular screens and/or parallax barriers for example, which may enable auto-stereoscopic 3D video display. In instances where the display 260 may not be capable of independently rendering 3D images, the 3D glasses 262 may be utilized, in conjunction with the display 260, to provide desirable 3D viewing experience. In this regard, the 3D glasses 262 may be operable to enable varying viewing for the left and right eyes, corresponding to the left and right view video content, respectively, such that 3D impression may be generated based on the combined effects of the right and left eyes. To facilitate proper 3D viewing via the 3D glasses 262, the operations and/or settings of the 3D glasses 262 and/or the display 260 may be synchronized during 3D playback operations. The 3D glasses 262 may be communicatively coupled to the video processing system 240, to facilitate configuring and/or managing viewing operations via the 3D glasses during 3D video playback. For example, the 3D glasses 262 may communicate with the video processing system 240 via one or more wireless links that may be supported by the communication module 254 and/or the antenna subsystem 256.

Synchronizing of the 3D glasses 262 may be performed based on the operational mode of the 3D glasses 262 and/or relevant native characteristics of the input video stream and/or the output video streams. For example, the 3D glasses 262 may utilize polarization and/or shutter based operations. In polarization based operations, the viewing glass or lens of each eye may have a different polarization such that the eyes may simultaneously receive differently polarized images, which when combined may render the desired 3D impression. During stereoscopic 3D video playback via the display 260, for example, the right and left view frames or fields may be rendered, on the display 260, with different polarization. To facilitate 3D viewing, the right and left eye view polarization via the 3D glasses 262 may be configured and/or adjusted, based on communication with the video processing system 240 via the communication module 254, such that each eye's polarization in the 3D glasses 262 may be similar to the corresponding polarization of the right and left view images displayed.

In shutter mode operations, the viewing glass or lens of each eye in the 3D glasses may be closed and/or open such that the each eye would only be allowed to perceive corresponding view images. For example, during stereoscopic 3D video playback, the left eye would only perceive the left view frames or frames and/or the right eye would only perceive the right view frames or frames. Accordingly, to facilitate 3D viewing, the right and left eye shuttering of the 3D glasses 262 may be configured and/or adjusted, based on communication with the video processing system 240 via the communication module 254, to ensure the shuttering frequency and/or opening duration for each side in the 3D glasses 262 properly corresponds to the alternating left and right frames or fields displayed via the display 260.

The configuring of the 3D glasses 262 may be performed, based on communication with the video processing system 240, prior to start of playback operations via the display 260. The operations of the 3D glasses 262 may also be adjusted and/or managed during playback operation to accommodate, for example, any changes in the parameters and/or characteristics of the output video streamed displayed via the display 260.

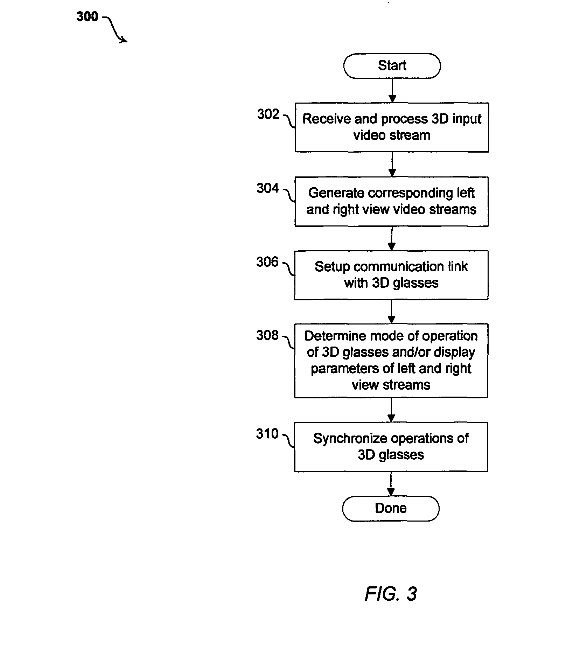

FIG. 3 is a flow chart that illustrates exemplary steps for synchronizing 3D glasses with 3D video displays, in accordance with an embodiment of the invention. Referring to FIG. 3, there is shown a flow chart 300 comprising a plurality of exemplary steps that may be performed to enable synchronizing 3D glasses with 3D video displays.

In step 302, a 3D input video stream may be received and processed. For example, the video processing system 240 may receive and process input video streams comprising compressed video data, which may correspond to stereoscopic 3D video. In this regard, the compressed video data may correspond to a plurality of view video sequences of frames or fields, comprising left and right view streams for example, which may be utilized to render 3D images via a display device, such as the display 260 for example. In step 304, a plurality of view sequences, comprising left and right view video streams for example, may be generated based on processing of the received 3D input streams. Frames and/or fields in the left and right video streams may be utilized to render images via the display 260 that may produce, when viewed appropriately, 3D perception. In this regard, in instances where the display 260 may not be capable of independently generating 3D impressions, via use of lenticular screens for example, additional devices, such as the 3D glasses 262, may be utilized to provide the desired 3D impressions.

In step 306, a communication link may be setup with the 3D glasses. For example, the video processing system 240 and/or the 3D glasses 262 may setup one or more communication links, via the communication module 254 and/or the antenna subsystem 256 for example, to enable interactions between the video processing system 240 and the 3D glasses 262 during 3D playback operations via the display 260. In step 308, a determination of the operating of 3D glasses and/or of various characteristics of the output video stream may be performed. For example, a determination of whether the 3D glasses 262 is operating in polarization or shutter mode may be performed. Also, where the video stream processed via the video processing system 240 comprises stereoscopic 3D video content, a the polarization and/or the frequency in alternating rendering of the left and right view fields or frames may be determined. This determination may be performed via the 3D glasses 262 and/or via the video processing system 240, independently and/or jointly. Furthermore, in performing such determination, the 3D glasses 262 and the video processing system 240 may communicate, via the communication module 254 for example, to exchange information and/or data regarding, for example, the characteristics of 3D video content being processed and/or played back via the video processing system 240. In step 310, operations of 3D glasses may be synchronized with the video playback operations. For example, the viewing operations of the 3D glasses 262 may be synchronized with the operations of the video processing system 240 during video playback via the display 260, substantially as described with regard to FIG. 2C.

Various embodiments of the invention may comprise a method and system for synchronizing 3D glasses with 3D video displays. The 3D glasses 262 may be operable to determine operating mode that is used during viewing of playback of 3D video content, via the video processing system 240 for example, and to configure and/or synchronize its operations with playback of the 3D video content, via the display 260, based on the determined operating mode. Exemplary operating modes may comprise polarization mode and/or shutter mode. Synchronizing the 3D glasses 262 may be performed during initialization of the 3D glasses 262, prior to start of the playback of the 3D video content, and/or dynamically during the playback of the 3D video content. The 3D glasses 262 may communicate with a video processing system 240, via the communication module 254 for example, to facilitate configuration of the 3D glasses 262 and/or synchronization of viewing operations via the 3D glasses 262 during playback of 3D video content, via the display 260 for example. The 3D glasses 262 may communicate with the video processing system 240 via one or more wireless interfaces, which may be supported in the video processing system 240 via the communication module 254. Exemplary wireless interfaces may comprise wireless personal area network (WPAN) interfaces and/or wireless local area network (WLAN) interfaces. The 3D video content may comprise, for example, stereoscopic left and right view video sequences of frames or fields. Accordingly, when the operating mode of the 3D glasses 262 and/or the playback of 3D video content via display 260 may be polarization mode, polarization of left eye viewing via the 3D glasses 262 may be synchronized with polarization of the stereoscopic left view video sequence and/or polarization of right eye viewing via the 3D glasses 262 may be synchronized with polarization of the stereoscopic right view video sequence. In instances where the operating mode of the 3D glasses 262 and/or the playback of 3D video content via display 260 may be shuttering mode, shuttering of left eye viewing via the 3D glasses 262 may be synchronized with rendering of frequency of rendering of frames and/or fields of the stereoscopic left view video sequence via the display 260 and/or shuttering of right eye viewing via the 3D glasses 262 may be synchronized with frequency of rendering of frames and/or fields of the stereoscopic right view video sequence via the display 260.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for synchronizing 3D glasses with 3D video displays.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for video processing, the method comprising:
performing by one or more processors and/or circuits in an optical viewing device:
determining an operating mode that is utilized for playback of 3D video content; and
configuring said optical viewing device to synchronize with said playback of said 3D video content based on said determined operating mode.

2. The method according to claim 1, comprising synchronizing said optical viewing device prior to start of said playback of said 3D video content and/or dynamically during said playback of said 3D video content.

3. The method according to claim 1, comprising communicating with a video processing device that is utilized for processing and/or displaying of said 3D video content to facilitate said configuration of said optical viewing device.

4. The method according to claim 3, comprising communicating with said video processing device via one or more wireless interfaces.

5. The method according to claim 4, wherein said one or more wireless interfaces comprise wireless personal area network (WPAN) interfaces and/or wireless local area network (WLAN) interfaces.

6. The method according to claim 1, wherein said operating mode comprises polarization mode and/or shutter mode.

7. The method according to claim 1, wherein said 3D video content comprises stereoscopic left and right view video sequences of frames or fields.

8. The method according to claim 7, comprising, when said optical viewing device is operating in a polarization mode, synchronizing polarization of left eye viewing via said optical viewing device with polarization of said stereoscopic left view video sequence and/or polarization of right eye viewing via said optical viewing device with polarization of said stereoscopic right view video sequence.

9. The method according to claim 7, comprising, when said optical viewing device is operating in a shutter mode, synchronizing shuttering of left eye viewing via said optical viewing device with displaying of frames and/or fields of said stereoscopic left view video sequence and/or shuttering of right eye viewing via said optical viewing device with displaying of frames and/or fields of said stereoscopic right view video sequence.

10. A method for video processing, the method comprising:
performing by one or more processors and/or circuits in a video processing system:
generating a three dimensional (3D) output video stream for display based on a plurality of view sequences extracted from an 3D input video stream; and
communicating with an optical viewing device that is utilized for viewing of said 3D output video stream, prior to and/or during playback of said 3D output video stream, to enable configuring said optical viewing device for said viewing and/or to enable synchronizing said viewing via said optical viewing device.

11. A system for video processing, the system comprising:
one or more circuits and/or processors in an optical viewing device that are operable to determine an operating mode that is utilized for playback of 3D video content; and
said one or more circuits and/or processors are operable to configure said optical viewing device to synchronize with said playback of said 3D video content based on said determined operating mode.

12. The system according to claim 11, wherein said one or more circuits and/or processors are operable to synchronize said optical viewing device prior to start of said playback of said 3D video content and/or dynamically during said playback of said 3D video content.

13. The system according to claim 11, wherein said one or more circuits and/or processors are operable to communicate with a video processing device that is utilized for processing and/or displaying of said 3D video content to facilitate said configuration of said optical viewing device.

14. The system according to claim 13, wherein said one or more circuits and/or processors are operable to communicate with said video processing device via one or more wireless interfaces.

15. A system for video processing, the system comprising:
one or more circuits and/or processors that are operable to generate a three dimensional (3D) output video stream for display based on a plurality of view sequences extracted from an 3D input video stream; and
said one or more circuits and/or processors are operable to communicate with an optical viewing device that is utilized for viewing of said 3D output video stream, prior to and/or during playback of said 3D output video stream, to enable configuring said optical viewing device for said viewing and/or to enable synchronizing said viewing via said optical viewing device.
